# FASCICULE DE BREVET EUROPEEN

(11) **EP 0 632 639 B1**
(45) Date de publication et mention de la délivrance du brevet: **22.04.1998**
(21) Numéro de dépôt: 93401705.4
(22) Date de dépôt: 01.07.1993
(51) Int. Cl.: H04N 1/32, H04M 11/06

(54) **Télécopieur à contrôle du courant de boucle de ligne**
Facsimilegerät mit Netzschleifenstromsteuerung
Facsimile apparatus with line loop current control

(43) Date de publication de la demande: 04.01.1995
(73) Titulaire: SOCIETE D'APPLICATIONS GENERALES D'ELECTRICITE ET DE MECANIQUE SAGEM, F-75783 Paris Cédex 16 (FR)
(72) Inventeur: Auffray, Jean-Paul, Vaureal, F-95000 Cergy (FR); Charbonnier, Philippe, F-78600 Maisons Lafitte (FR)
(74) Mandataire: Bloch, Gérard

(56) Documents cités:
- EP-A- 0 419 363
- EP-A- 0 427 622
- EP-A- 0 448 312
- PATENT ABSTRACTS OF JAPAN vol. 15, no. 121 (E-1049)25 Mars 1991 & JP-A-03 009 647 (TOKYO ELECTRIC CO. LTD.) 17 Janvier 1991
- PATENT ABSTRACTS OF JAPAN vol. 14, no. 414 (E-975)7 Septembre 1990 & JP-A-02 159 869 (FUJITSU LTD.) 20 Juin 1990

## Description

La présente invention concerne un télécopieur destiné à effectuer le contrôle d'une ligne de transmission de données au moyen d'une surveillance des signaux transmis sur celle-ci.

Un tel télécopieur est décrit par exemple dans EP-A- 0 427 622.

On connaît déjà des dispositifs de contrôle de ligne de transmission de données, qui effectuent une surveillance des signaux transmis par cette ligne. En effet, lorsque deux appareils de réception de données sont raccordés à une même ligne, chacun doit être en mesure de déterminer, en cas d'arrivée d'un appel, si celui-ci lui est destiné ou non, afin d'y répondre. Détectant l'arrivée de signaux d'appel, chacun d'eux connecte alors, sur les deux fils de la ligne, un dispositif de surveillance de ligne chargé d'analyser des signaux suivant ces signaux d'appel et émis par l'appareil ayant effectué cet appel. Ainsi, dans le cas où, à une même station, un terminal, par exemple du type répondeur téléphonique, est raccordé à la même ligne qu'un télécopieur, chacun connecte à la ligne son dispositif de surveillance de ligne, celui du télécopieur étant un modem (modulateur-démodulateur) recherchant la présence d'une fréquence significative d'un appel vers ce télécopieur, afin qu'il y réponde pour établir la communication avec un télécopieur effectuant l'appel.

Un tel agencement de deux dispositifs de surveillance connectés simultanément, à une même station, sur les fils de ligne, présente cependant des inconvénients.

En effet, les circuits électroniques de l'appareil émettant les signaux sur la ligne, pour effectuer l'appel, sont conçus pour être raccordés à une ligne terminée par un seul appareil récepteur. Or, dans le cas considéré, ces signaux d'appel et les signaux suivants sont reçus par les deux appareils, si bien que chacun de ceux-ci ne reçoit qu'une partie, sensiblement la moitié, de chaque signal, ce qui peut entraîner un fonctionnement incorrect de l'appareil récepteur concerné par l'appel.

Il a été tenté de remédier à ce problème en adjoignant, au télécopieur, un dispositif de contrôle de ligne supplémentaire pouvant fonctionner en prélevant sur la ligne très peu de signal et effectuant l'analyse des signaux d'appel puis des signaux suivants significatifs d'un appel vers ce télécopieur. On évite ainsi, dans cette phase, l'utilisation du modem, et donc sa connexion à la ligne, réservant ainsi au répondeur la quasi-totalité de chaque signal reçu, au lieu de lui en prélever la moitié. Si le télécopieur est concerné par l'appel, ce dispositif de contrôle supplémentaire le détecte par l'analyse des signaux suivant les signaux d'appel et commande alors la connexion du modem sur la ligne. Le répondeur téléphonique peut avoir un dispositif supplémentaire de contrôle de ligne du même type, mais qui a un effet inverse, c'est-à-dire qu'il déconnecte de la ligne le répondeur téléphonique s'il détecte l'arrivée de signaux significatifs d'un appel vers le télécopieur associé.

Cependant, la présence d'un dispositif supplémentaire de surveillance nécessite un raccordement spécifique sur la ligne au travers d'un transformateur relativement important car il doit assurer un isolement élevé entre ce dispositif supplémentaire de surveillance et la ligne afin de le protéger contre les surtensions pouvant provenir de celle-ci.

La présente invention vise à pallier ces inconvénients.

A cet effet, le télécopieur, agencé pour être relié à une ligne de transmission de données qu'il partage avec un terminal, comprend un transformateur, agencé pour, au primaire, être relié à la ligne, au secondaire, à une interface de traitement de données, et un circuit de bouclage de la ligne pour relier la ligne au primaire du transformateur agencé pour laisser passer un courant de boucle lorsque la ligne est reliée à l'interface, et est caractérisé par le fait qu'il comporte des moyens de contrôle agencés pour être reliés sous haute impédance au secondaire du transformateur et donc pour, en fonction de la nature des données transmises sur la ligne, soit relier l'interface au transformateur, soit l'en isoler et inhiber le passage du courant dans le circuit de bouclage de ligne.

Ainsi, lorsque le télécopieur n'est pas actif mais qu'il doit cependant pouvoir passer à cet état s'il surgit un appel pour lui, c'est un circuit de surveillance des moyens de contrôle, ne nécessitant qu'un courant continu limité, qui assure l'analyse des signaux de ligne pour la détection de cet appel, ce qui autorise, dans cet état, à haute impédance, la déconnexion de l'interface du télécopieur vis-à-vis de la ligne, évitant de ce fait la consommation du courant continu nominal de ce télécopieur. Si un répondeur téléphonique est branché en parallèle sur la ligne du télécopieur de l'invention, ce répondeur peut ainsi recevoir un courant continu, issu de la ligne, de valeur voisine du courant continu nominal puisque le circuit de surveillance n'en nécessite que très peu. Il est bien évident qu'un appareil autre qu'un répondeur téléphonique, mais destiné à être raccordé à une telle ligne, peut être branché en parallèle sur ce télécopieur. De plus, l'invention présente l'avantage de s'être affranchie d'un transformateur supplémentaire puisque le circuit de surveillance utilise celui, existant, du télécopieur. Afin de supprimer toute consommation sur la ligne au repos, il peut être prévu que le circuit de bouclage de ligne soit relié à la ligne par l'intermédiaire d'un interrupteur commandé par un circuit détecteur d'appel. En l'absence d'appel en arrivée, on peut ainsi totalement supprimer la consommation en courant continu dans le circuit de bouclage de ligne. De plus, des moyens de connexion peuvent être prévus pour relier l'interface au secondaire du transformateur, ces autres moyens de connexion pouvant être commandés par les moyens de contrôle.

Avantageusement, le circuit de bouclage est implanté en parallèle par rapport au primaire du transformateur, ce qui permet d'employer un transformateur de taille réduite puisqu'il n'a pas à laisser passer le courant continu.

De plus, le circuit de bouclage peut comporter un générateur de courant à courant contrôlable par le circuit de surveillance, afin d'imposer une valeur de courant continu de ligne bien précise dans chacun des deux états possibles du circuit de bouclage pour lesquels il est parcouru par un courant.

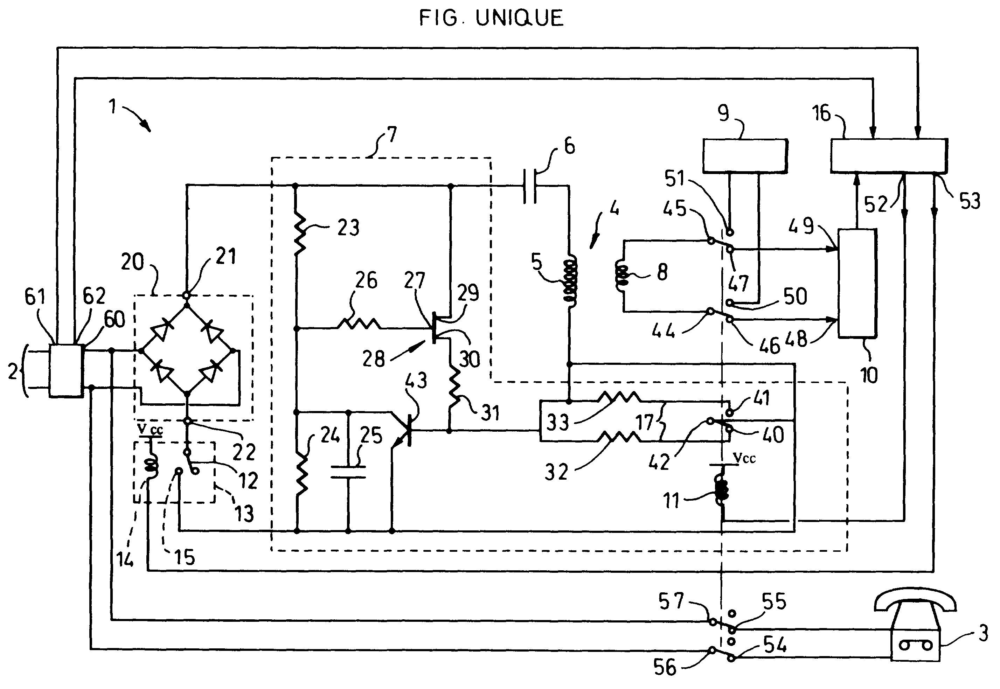

L'invention sera mieux comprise à l'aide de la description suivante de la forme de réalisation préférée du télécopieur selon l'invention, en référence à la figure unique en annexe qui le représente.

Le télécopieur 1 représenté sur la figure unique est relié en parallèle, par ses deux fils de raccordement, aux deux fils d'une ligne 2, tandis qu'un répondeur téléphonique 3 est aussi relié en parallèle sur cette ligne 2. Cette ligne 2 est polarisée à son extrémité éloignée du télécopieur 1, située dans un central téléphonique, par une tension continue et est prévue pour transmettre un courant continu d'approximativement 30 milliampères, en plus des signaux transmis, à tout appareil raccordé à cette ligne 2 et qui devient actif.

Le télécopieur 1 comporte un transformateur 4 dont le primaire 5, en série avec un condensateur 6, est branché en parallèle sur un circuit inductif 7 à courant constant et dont le secondaire 8 est raccordable à une interface 9 de ce télécopieur 1 ou à un circuit de surveillance de ligne 10, au moyen d'un relais inverseur 11. La valeur du courant du circuit inductif 7 est contrôlable, c'est-à-dire que ce circuit inductif 7 comporte une entrée de commande 17 permettant de commander une commutation de ce circuit inductif 7 faisant passer son courant à une valeur prédéterminée. Ce circuit inductif 7 est branché en parallèle sur la ligne 2 au travers d'un pont redresseur 20 à quatre diodes, à double alternance, fournissant à ce circuit inductif 7 un courant continu de sens connu et inchangé quelle que soit la polarité des fils de ligne 2, courant issu d'une borne positive 21 et revenant vers la ligne 2 par une borne négative 22. Un contact 12 d'un relais, ou interrupteur, 13, comportant une bobine 14, alimentée par une tension continue Vcc d'alimentation, relie, lorsque le relais 13 est au travail, la borne négative 22 à une borne 15 de ce relais 13 reliée à un fil de retour du courant traversant le circuit inductif 7. Lorsque la bobine 14 n'est pas excitée, le télécopieur 1 est à l'état inactif, c'est-à-dire que le circuit inductif 7, et donc le transformateur 4, sont isolés de la ligne 2. Dans le circuit inductif 7, le courant issu de ligne 2 traverse, quand il peut passer, un montage équivalent à une inductance et assurant aussi le maintien de ce courant à une valeur déterminée de 1 milliampère ou bien de 30 milliampères, environ, correspondant respectivement à un état de surveillance et un état actif du télécopieur 1. Ce montage comporte un pont diviseur branché entre la borne positive 21 et la borne 15 et formé de deux résistances 23 et 24 montées en série, d'ordre de grandeur du mégohm, avec un condensateur 25 de filtrage en parallèle sur la résistance 24, qui, elle-même, est reliée à la borne 15 d'un côté. Le point milieu de ce pont diviseur est relié à une résistance 26 reliée de l'autre côté à la grille 27 d'un transistor VMOS, repéré 28, dont le drain 29 est relié à la borne positive 21. Sa source 30 est reliée à une résistance 31 qui est elle-même reliée, de l'autre côté, à une résistance 32 de 470 ohms et à une résistance 33 de 15 ohms, elles-mêmes respectivement reliées par leur autre côté, relié à ladite entrée de commande 17, à l'une d'une première paire de bornes formée d'un premier contact repos 40 et d'un premier contact travail 41 d'un premier contact du relais 11 inverseur, comportant au total cinq telles paires de contacts repos / travail, dont une première borne commune 42, associée à une lame mobile relative aux premiers contacts 40 et 41, est reliée à la borne 15. Par ailleurs, l'émetteur d'un transistor NPN, référencé 43, est relié à la borne 15, sa base étant reliée au point commun aux résistances 31, 32 et 33 tandis que son collecteur est relié au point milieu du pont diviseur, entre les résistances 23 et 24.

Les deux fils de sortie du secondaire 8 du transformateur 4 sont reliés respectivement à une deuxième et une troisième borne commune 44 et 45 du relais 11 reliées respectivement en permanence à une deuxième et une troisième lame mobile dudit relais 11, des deuxième et troisième contacts repos correspondants 46 et 47 étant respectivement reliés à des entrées 48 et 49 du circuit de surveillance de ligne 10, qui présente une impédance d'entrée élevée supérieure à 10 kohms, tandis que des deuxième et troisième contacts travail 50 et 51 sont reliés à un modem de l'interface 9 du télécopieur 1, présentant une impédance de 600 ohms vis-à-vis de la ligne 2. Ce circuit de surveillance de ligne 10 est agencé pour détecter la présence, sur la ligne 2, d'une fréquence déterminée significative d'un appel vers le télécopieur 1 et fournir cette information à un microprocesseur 16 du télécopieur 1. Ce microprocesseur 16 comporte une sortie 52 de commande de commutation qui est reliée à une extrémité de la bobine du relais 11, alimentée par la tension continue Vcc à son autre extrémité, tandis qu'une sortie 53 de commande, du microprocesseur 16, est reliée à l'extrémité de la bobine 14 non reliée à la tension Vcc. Le télécopieur 1 comporte aussi un circuit 60 détecteur de signaux d'appel en ligne entre l'arrivée de cette ligne 2 et le pont redresseur 20. Ce circuit détecteur 60 est d'un type connu ; il est sensible au courant continu de bouclage de ligne. En cas d'appel et de décroché le circuit détecteur 60 fournit, par une sortie 61, un signal au microprocesseur 16, par un fil isolé de la ligne 2. En cas d'appel seulement, le circuit détecteur 60 détecte la présence d'une tension d'appel sur la ligne, c'est-à-dire l'arrivée d'un appel. Dans ce cas, une sortie 62 du circuit détecteur 60, isolée de la ligne 2, fournit au microprocesseur 16 un signal correspondant.

Par ailleurs, les deux fils de ligne du répondeur téléphonique 3 sont respectivement reliés à des quatrième et cinquième contacts repos 54 et 55 du relais 11 dont les quatrième et cinquième bornes communes 56 et 57 correspondantes sont respectivement reliées à un fil propre de la ligne 2 entre le pont redresseur 20 et le circuit détecteur 60.

Le fonctionnement du télécopieur 1 est le suivant.

Lorsque la ligne 2 est au repos, les relais 11 et 13 sont au repos, ce qui entraîne que le répondeur téléphonique 3 est relié à la ligne 2 tandis que le circuit inductif 7, le transformateur 4 et les éléments associés sont isolés de la ligne 2. Le circuit détecteur 60 est, par contre, toujours relié à celle-ci. Le répondeur téléphonique 3 effectue, en cas d'arrivée d'une tension altervative d'appel, un bouclage de la ligne 2, absorbant un courant continu d'environ 30 milliampères qui indique à l'appareil appelant que la connexion physique avec un appareil récepteur est effectuée et qu'il peut donc arrêter l'émission de la tension alternative d'appel et émettre les signaux suivants susceptibles de contenir ladite fréquence prédéterminée.

Le circuit détecteur 60 détecte l'arrivée de la tension alternative d'appel puis sa disparition, avec l'apparition concomitante du courant de boucle dû au bouclage de ligne par le répondeur 3. Le microprocesseur 16 reçoit ces informations en provenance des sorties 61 et 62 et envoie, par sa sortie 53, une commande d'excitation du relais 13 dont le contact 12 se ferme, ce qui a pour effet de permettre l'alimentation du transformateur 4 en signaux alternatifs de ligne. En d'autres termes, le circuit 60 commande le relais 13. Le relais 11 étant alors au repos, les signaux alternatifs de ligne 2 provenant du secondaire 8 du transformateur 4 sont aiguillés vers le circuit de surveillance de ligne 10, après traversée préalable du pont redresseur 20, du contact 12 et du condensateur 6 qui ne laisse passer que les signaux alternatifs.

Du courant continu traverse le circuit inductif 7 et en particulier la résistance 32, alimentée à travers le transistor 28. La valeur de 470 ohms de cette résistance 32 a été calculée pour que le courant ci-dessus soit voisin de 1 milliampère, calcul effectué en fonction de la tension diode de l'émetteur du transistor 43 qui se met à conduire lorsque ce courant excède 1 mA, ce qui abaisse la tension médiane du pont diviseur 23 et 24 et est transmis à la grille 27 du transistor 28 par la résistance 26, entraînant une diminution du courant drain-source. Grâce au choix d'une valeur élevée pour les résistances 23 et 24, le courant les traversant est nettement inférieur à 1 mA, donc ne fausse pas cette valeur, ce qui est rendu possible par le fait que le transistor 28 servant de ballast est un transistor MOS, donc commandé en tension, la résistance 26 n'ayant qu'un rôle de protection, tandis que la résistance 31 permet d'assurer un fonctionnement en inductance active par rétroaction au moyen du transistor 43, du condensateur 25 et de la résistance 23.

Le circuit inductif 7 est commandé par la sortie 52 du microprocesseur 16 de façon telle qu'il inhibe tout passage de courant d'importance significative venant de la ligne 2, il ne prélève alors de celle-ci que 1 milliampère, ce qui ne perturbe pas le fonctionnement du répondeur 3. Le circuit de surveillance de ligne 10 reçoit les signaux de ligne 2 et est à même de détecter des fréquences caractéristiques d'un appel venant d'un autre télécopieur. Dans ce cas, la sortie 52 du microprocesseur 16 transmet un signal de commande de commutation, qui active le relais 11, ce qui branche le secondaire 8 du transformateur 4 sur le modem de l'interface 9 du télécopieur 1 local et déconnecte de la ligne 2 le répondeur téléphonique 3.

De plus, l'activation du relais 11 amène à substituer la résistance 33 de 15 ohms à la résistance 32 de 470 ohms, ce qui augmente, dans le rapport inverse de ces valeurs, le courant continu traversant le transistor 28, qui passe de 1 à 30 mA, et assure le bouclage voulu de la ligne 2 en substitution du bouclage de ligne effectué initialement par le répondeur 3, assurant ainsi une continuité dans la prise de la ligne 2.

Le retour à l'état inactif de la ligne 2, par retour à l'état repos des relais 11 et 13 est alors commandé par les sorties 52 et 53. Si, par contre, aucune fréquence caractéristique n'est détectée au bout d'une minute après le début de l'appel, le microprocesseur 16 commande le retour à l'état repos du relais 13.

Il est à noter que la déconnexion du circuit de surveillance de ligne 10 par les deuxième et troisième contacts repos 46 et 47 n'est pas obligatoire puisque ce circuit de surveillance de ligne 10 est toujours à impédance élevée.

## Revendications

1. Télécopieur (1) agencé pour être relié à une ligne (2) de transmission de données qu'il partage avec un terminal (3), comprenant un transformateur (4), agencé pour, au primaire (5), être relié à la ligne (2), au secondaire (8), à une interface (9) de traitement de données, et un circuit (7) de bouclage de la ligne (2) pour relier la ligne au primaire du transformateur, agencé pour laisser passer un courant de boucle lorsque la ligne (2) est reliée à l'interface (9), télécopieur caractérisé par le fait qu'il comporte des moyens de contrôle (10, 16) agencés pour être reliés sous haute impédance au secondaire (8) du transformateur (4) et donc pour, en fonction de la nature des données transmises sur la ligne (2), soit relier l'interface (9) au transformateur (4), soit l'en isoler et inhiber le passage du courant dans le circuit (7) de bouclage de ligne.

2. Télécopieur selon la revendication 1, dans lequel le circuit de bouclage de ligne (7) est relié à la ligne (2) par l'intermédiaire d'un interrupteur (13) commandé par un circuit détecteur d'appel (60).

3. Télécopieur selon l'une des revendications 1 et 2, dans lequel des moyens de connexion (11), commandés par lesdits moyens de contrôle (10, 16) sont prévus pour relier l'interface (9) au secondaire (8) du transformateur (4).

4. Télécopieur selon l'une des revendications 1 à 3, dans lequel le circuit (7) de bouclage est implanté en parallèle par rapport au primaire (5) du transformateur (4).

5. Télécopieur selon l'une des revendications 1 à 4, dans lequel le circuit (7) de bouclage comporte un générateur de courant continu à courant commutable par lesdits moyens de contrôle (10, 16).

## Patentansprüche

1. Fernkopierer (1), der dazu eingerichtet ist, mit einer Datensendeleitung (2) verbunden zu werden, die er mit einem Terminal (3) teilt, mit einem Transformator (4), der dazu eingerichtet ist, mit der Primärseite (5) mit der Leitung (2) und mit der Sekundärseite (8) mit einem Interface (9) zur Datenverarbeitung verbunden zu werden, und mit einer Schaltung (7) zum Einschleifen der Leitung (2), um die Leitung mit der Primärseite des Transformators zu verbinden, und dazu eingerichtet, einen Schleifenstrom durchzulassen, wenn die Leitung (2) mit dem Interface (9) verbunden ist, wobei der Fernkopierer dadurch gekennzeichnet ist, daß er eine Steuereinrichtung (10, 16) aufweist, die dazu eingerichtet ist, mit einer hohen Impedanz mit der Sekundärseite (8) des Transformators (4) verbunden zu werden und somit in Abhängigkeit der Art der auf der Leitung (2) übertragenen Daten entweder das Interface (9) mit dem Transformator (4) zu verbinden oder diesen davon zu trennen und den Stromdurchgang in die Schaltung (7) zur Einschleifung der Leitung zu verhindern.

2. Fernkopierer nach Anspruch 1, dadurch gekennzeichnet, daß die Schaltung (7) zur Einschleifung der Leitung mit der Leitung (2) unter Zwischenschaltung eines Schalters (13) verbunden ist, der durch eine Anrufserfassungsschaltung (60) gesteuert wird.

3. Fernkopierer nach einem der Ansprüche 1 oder 2, dadurch gekennzeichnet, daß Anschlußmittel (11) vorgesehen sind, die durch die Steuereinrichtung (10, 16) gesteuert werden, um das Interface (9) mit der Sekundärseite (8) des Transformators (4) zu verbinden.

4. Fernkopierer nach einem der Ansprüche 1 bis 3, dadurch gekennzeichnet, daß die Schaltung (7) zur Einschleifung parallel zur Primärseite (5) des Transformators (4) geschaltet ist.

5. Fernkopierer nach einem der Ansprüche 1 bis 4, dadurch gekennzeichnet, daß die Schaltung (7) zur Einschleifung eine Gleichstromerzeugungseinrichtung aufweist, wobei der Strom durch die genannte Steuereinrichtung (10, 16) umgeschaltet werden kann.

## Claims

1. Facsimile machine (1) arranged to be connected to a data transmission line (2) which it shares with a terminal (3), comprising a transformer (4), arranged in order, at the primary coil (5), to be connected to the line (2), at the secondary coil (8), to a processing data interface (9), and a circuit (7), for looping the line (2) in order to connect the line to the primary coil of the transformer,arranged to allow a loop current to pass when the line (2) is connected to the interface (9), the facsimile machine being characterized by the fact that it comprises control means (10, 16) arranged to be connected at high impedance to the secondary coil (8) of the transformer (4) and thus in order, depending on the nature of the data transmitted on the line (2), either to connect the interface (9) to the transformer (4), or to isolate it therefrom and inhibit the passage of current in the line looping circuit (7).

2. Facsimile machine according to Claim 1, in which the line looping circuit (7) is connected to the line (2) through a switch (13) controlled by a call detector circuit (60).

3. Facsimile machine according to one of Claims 1 and 2, in which connection means (11), controlled by said control means (10, 16), are provided for connecting the interface (9) to the secondary coil (8) of the transformer (4).

4. Facsimile machine according to one of Claims 1 to 3, in which the looping circuit (7) is implanted in parallel with respect to the primary coil (5) of the transformer (4).

5. Facsimile machine according to one of Claims 1 to 4, in which the looping circuit (7) comprises a direct current generator whereof the current can be switched by said control means (10, 16).
